# EUROPEAN PATENT SPECIFICATION

(11) **EP 2 581 915 B1**
(45) Date of publication and mention of the grant of the patent: **16.03.2016**
(21) Application number: 10852688.0
(22) Date of filing: 09.06.2010
(51) Int. Cl.: H01B 1/06, H01J 29/02, C09J 1/02

(54) **CONDUCTIVE GLUE MIXTURE, FLUORESCENT SCREEN ANODE PLATE AND MANUFACTURE METHOD THEREOF**
LEITENDE KLEBERMISCHUNG, ANODENPLATTE EINES FLUORESZENZSCHIRMS UND HERSTELLUNGSVERFAHREN
MÉLANGE DE COLLE CONDUCTEUR, PLAQUE ANODIQUE D'ÉCRAN FLUORESCENT ET PROCÉDÉ DE FABRICATION ASSOCIÉ

(43) Date of publication of application: 17.04.2013
(73) Proprietor: Ocean's King Lighting Science & Technology Co., Ltd., Guangdong 518054 (CN)
(72) Inventor: ZHOU, Mingjie, Shenzhen Guangdong 518054 (CN); MA, Wenbo, Shenzhen Guangdong 518054 (CN); LI, Qingtao, Shenzhen Guangdong 518054 (CN); SHAO, Pengrui, Shenzhen Guangdong 518054 (CN)
(74) Representative: Michalski Hüttermann & Partner Patentanwälte mbB
(86) International application number: PCT/CN2010/073733
(87) International publication number: WO 2011/153695

(56) References cited:
- CN-A- 1 182 941
- CN-A- 1 355 541
- CN-A- 1 801 400
- CN-A- 1 922 712
- JP-B2- 2 858 271
- DATABASE WPI Week 198743 Thomson Scientific, London, GB; AN 1987-304474 XP002731197, & JP S62 216105 A (OTSUKA KAGAKU YAKUHIN KK) 22 September 1987 (1987-09-22)

## Description

### FIELD OF THE INVENTION

The present invention relates to vacuum microelectronics technologies, and especially to a conductive adhesive mixture, a fluorescent screen anode plate and manufacturing methods thereof.

### BACKGROUND OF THE INVENTION

The cathodoluminescence device, particularly the field emission light source, has such advantages as energy saving, environmental protection, fast starting, being thin and light, as well as strong environmental adaptability. In the era of vigorously advocating energy saving and environmental protection, it has become an important research topic in various countries as an environmental lighting source and has huge development potential.

The field emission light can be applied to the lighting source and information terminal display device. The structure of the field emission luminous device is mainly composed of a cathode electron source and an anode luminous screen. The anode luminous screen is composed of a glass substrate, a conductive layer and a luminous layer. The luminous layer can be made of luminous materials, such as thin film, luminous glass or phosphor. The commonly used at present is the phosphor luminous material. The phosphor layer is manufactured mainly by such process methods as the deposition method, the screen printing method or the electrophoresis method, making the substrate coated with a luminous layer having a proper thickness and a smooth surface. The produced fluorescent screen usually works under conditions of large current and low voltage.

The fluorescent screen anode plate generally uses the phosphor as the luminous layer; the oxide phosphor, having poor electrical conductivity, is prone to resulting in the anode charge accumulation, thus causing such problems as voltage drop, lowering the luminous efficiency of the device.

### SUMMARY OF THE INVENTION

In view of this, it is an object of this invention to provide a conductive adhesive mixture that can improve electrical conductivity of the fluorescent screen anode plate, as well as a fluorescent screen anode plate manufactured with this conductive adhesive mixture.

Besides, it is another object of this invention to provide a method of manufacturing the conductive adhesive mixture and the fluorescent screen anode plate.

A conductive adhesive mixture, comprising a component A and a component B, wherein the amount of the component A is 0.1 % to 28% of the dry weight of the conductive adhesive mixture; the component A is selected from one or more of the group consisting of SnCl₄, InCl₃ and SbCl₃; and
the amount of the component B is 72% to 99.9% of the dry weight of the conductive adhesive mixture, the component B is selected from one or more of the group consisting of K₂O.nSiO₂, Na₂O·SiO₂, (SiO₂)ₙ and Al₂O₃.

Preferably, the conductive adhesive mixture further comprising a component C, the amount of the component C is 0.05% to 2% of the dry weight of the conductive adhesive mixture, and the component C is selected from one or two of the group consisting of Sn nanoparticles and In nanoparticles.

It is another object of the present invention is to provide a method of preparation of the conductive adhesive mixture:

Providing the component A of 0.1 % to 28% by weight and the component B of 72% to 99.9% by weight; wherein the component A is selected from one or more of the group consisting of SnCl₄, InCl₃ and SbCl₃, and the component B is selected from one or more of the group consisting of K₂O·nSiO₂, Na₂O·nSiO₂, (SiO₂)ₙ or Al₂O₃; and mixing the component A and the component B together, adding deionized water, and subjecting the mixture to ultrasonic waves for 25 to 35 minutes to produce the conductive adhesive mixture.

A fluorescent screen anode plate manufactured with the above conductive adhesive mixture is provided, comprising: a substrate having a conductive layer; and a phosphor layer located on the conductive layer, wherein the fluorescent screen anode plate further comprises a conductive adhesive layer coated on a surface of the phosphor layer and formed by the conductive adhesive mixture.

Preferably, the thickness of the conductive adhesive layer is in a range of 0.1 to 2 µm.

A method of manufacturing the fluorescent screen anode plate, comprising the following steps:
S1: coating a phosphor onto a conductive layer of a substrate to form a phosphor layer;
S2: coating the conductive adhesive mixture onto the phosphor layer to form a conductive adhesive layer; and
S3: drying and heat-treating the conductive adhesive layer to obtain the fluorescent screen anode plate.

Preferably, in Step S1, the substrate with the conductive layer is an indium-tin oxide glass (i.e. the ITO glass); the phosphor is the yttrium terbium silicate green phosphor, the yttrium europium oxide red phosphor or the yttrium cerium silicate blue phosphor; the phosphor is coated onto the conductive layer of the substrate by the deposition or screen printing method to form the phosphor layer, and the phosphor layer is heat treated at 450°C for from 30 minutes to 2 hours after the formation thereof on the conductive layer of the substrate; in Step S2, the conductive adhesive mixture is coated onto the surface of the phosphor layer by an infiltration or spincoating method; in Step S3, the drying temperature is from 45°C to 55°C, the heat treatment temperature is from 120°C to 200°C, and the heat treatment duration is from 30 minutes to 10 hours.

In the conductive adhesive mixture, the component A is selected from one or more of the group consisting of SnCl₄, InCl₃ and SbCl₃, and the component B is selected from one or more of the group consisting of K₂O·nSiO₂, Na₂O·nSiO₂, (SiO₂)ₙ and Al₂O₃, and the conductive adhesive mixture formed by mixing them has good electrical conductivity. When the conductive adhesive mixture is applied to the fluorescent screen anode plate, the electrical conductivity of the phosphor layer and the service life of the anode plate are improved. It is significant for accelerating commercialization of the cold cathode light source and field emission flat-panel display devices to improve the service life and light efficiency of the field emission device.

The component C is selected from one or two of the group consisting of Sn nanoparticles and In nanoparticles, which further improves electrical conductivity of the conductive adhesive mixture after being added into the conductive adhesive mixture. The ratio of the components of the conductive adhesive mixture can be adjusted, and thus different conductive adhesive mixtures can be prepared with different properties, and the range of application is greatly expanded.

In addition, the process of manufacturing the conductive adhesive mixture and the fluorescent screen anode plate is simple and has a low requirement for facilities, and is thus easy to be popularized.

### BRIEF DESCRIPTION OF THE DRAWINGS

FIG. 1 is a schematic structural view of a fluorescent screen anode plate.
FIG. 2 is a flow chart of the method for manufacturing the fluorescent screen anode plate.

### DETAILED DESCRIPTION

A conductive adhesive mixture is prepared by mixing component A, the component B and the ionized water and subjecting the mixture to ultrasonic waves for 25 to 35 minutes, where the amount of the component A is 0.1% to 28% of the dry weight of the conductive adhesive mixture, and the amount of the component B is 72% to 99.9% of the dry weight of the conductive adhesive mixture. The component A is selected from one or more of the group consisting of SnCl₄, InCl₃ and SbCl₃, and the component B is selected from one or more of the group consisting of K₂O·nSiO₂, Na₂O·nSiO₂, (SiO₂)ₙ and Al₂O₃.

In a preferred embodiment, the conductive adhesive mixture further includes a component C, which is selected from one or more of the group consisting of Sn nanoparticles and In nanoparticles. The addition of the component C allows electrical conductivity of the conductive adhesive mixture to be further improved.

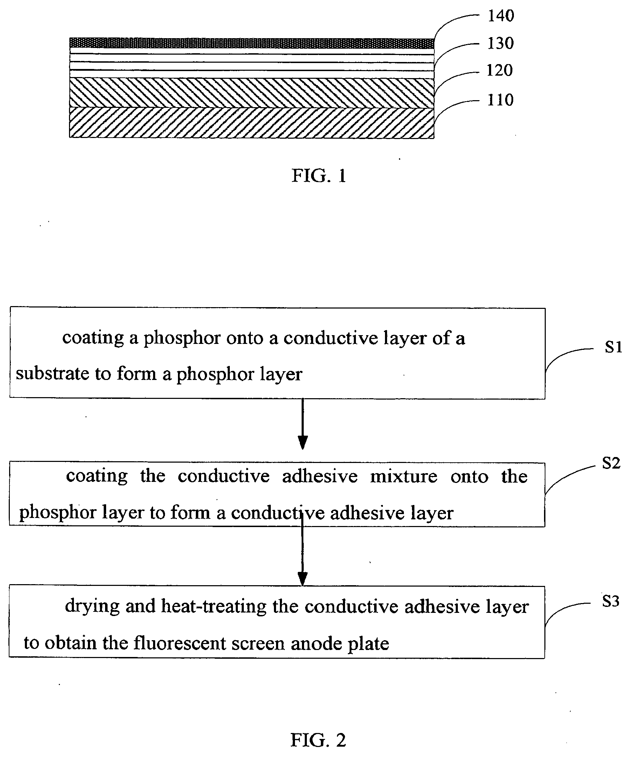

A fluorescent screen anode plate as shown in FIG. 1 includes a substrate 110, a conductive layer 120 formed on a surface of the substrate 110, and a phosphor layer 130 located on the conductive layer 120. In addition, the fluorescent screen anode plate further includes a conductive adhesive layer 140 having good electrical conductivity coated on a surface of the phosphor layer 130 and formed by the above-mentioned conductive adhesive mixture. The conductive adhesive layer 140 has a thickness of 0.1~2 µm.

A method of manufacturing the fluorescent screen anode plate as shown in FIG. 2 includes the following steps:
S1: The phosphor is coated onto the conductive layer of the substrate to form the phosphor layer;
S2: the conductive adhesive mixture is coated onto the phosphor layer to form the conductive adhesive layer; and
S3: the conductive adhesive layer is dried and heat-treated to obtain the fluorescent screen anode plate.

Preferably, in Step S1, the substrate is an ITO glass. Step S1 further includes: the phosphor layer is heat treated at 450°C for 30 minutes to 2 hours after the formation on the conductive layer of the substrate; and the phosphor is coated onto a conductive layer by a deposition or screen printing method. In Step S2, the conductive adhesive mixture is coated onto the surface of the phosphor layer by an infiltration or spincoating method to form the conductive adhesive layer. In Step S3, the drying temperature is 45°C~55°C, the heat treatment temperature is 120°C~200°C, and the heat treatment duration is from 30 minutes to 10 hours.

In a preferred embodiment, the conductive adhesive mixture includes a component A, a component B, and a component C. The component A is conductive hydrochloride, the component B is silicate salt, (SiO₂)ₙ or Al₂O₃, and the component C is Sn nanoparticles and In nanoparticles, and the conductive adhesive mixture formed by mixing the three components has good electrical conductivity. The conductive adhesive mixture is coated onto the phosphor layer of the fluorescent screen anode plate by an infiltration or spincoating method, thus forming the conductive adhesive layer with a thickness of 0.1~2 µm. When the conductive adhesive mixture is applied to the fluorescent screen anode plate, the electrical conductivity of the phosphor layer and the service life of the anode plate are improved. It is significant for accelerating commercialization of the cold cathode light source and field emission flat-panel display devices to improve the service life and light efficiency of the field emission device.

The ratio of the three components of the conductive adhesive mixture can be adjusted, and thus different conductive adhesive mixtures can be prepared with different properties, and the range of application is greatly expanded.

In addition, the process of manufacturing the conductive adhesive mixture and the fluorescent screen anode plate is simple and has a low requirement for facilities, and is thus easy to be popularized.

The conductive adhesive mixture, the fluorescent screen anode plate and the manufacturing methods thereof of the present invention will further be described below mainly with reference to the specific examples.

### Example 1

Preparation of the conductive adhesive mixture: 28 g of SnCl₄, 70 g of potassium silicate, 700 ml of ionized water, and 2 g of Sn nanoparticles were mixed together, and then the mixture was subjected to ultrasonic waves for 30 minutes to produce the conductive adhesive mixture.

An ITO glass was cut according to a predetermined size, and then washed with acetone, alcohol and deionized water, respectively. After the ITO glass was dried, a yttrium terbium silicate green phosphor was deposited onto an ITO surface of the ITO glass to form a phosphor layer, and then the ITO glass was heat-treated at 450°C for 30 minutes. Finally, a conductive adhesive was coated onto the surface of the phosphor layer by the spincoating process and dried at a low temperature of 45°C, and the conductive adhesive was heat treated at 120°C for 5 hours to obtain the fluorescent screen anode plate. The conductive adhesive layer therein had a thickness of about 0.1 µm.

### Example 2

Preparation of the conductive adhesive mixture: 4.5 g of InCl₃ solution, 95 g of sodium silicate, 600 ml of ionized water, and 0.5 g of In nanoparticles were mixed together, and then the mixture was subjected to ultrasonic waves for 30 minutes to produce the conductive adhesive mixture.

An ITO glass was cut according to a predetermined size, and then washed with acetone, alcohol and deionized water, respectively. After the ITO glass is dried, an yttrium europium oxide red phosphor was deposited onto an INTO surface of the ITO glass to form a phosphor layer, and then the ITO glass was heat-treated at 450°C for 1 hour. Finally, a conductive adhesive was coated onto the surface of the phosphor layer by the infiltration process and dried at a low temperature of 50°C, and the conductive adhesive was heat treated at 150°C for 2 hours to obtain the fluorescent screen anode plate. The conductive adhesive layer therein had a thickness of about 2µm.

### Example 3

Preparation of the conductive adhesive mixture: 28 g of SbCl₃, 72 g of poly(silicon dioxide), and 350 ml of deionized water were mixed together, and then the mixture was subjected to ultrasonic waves for 30 minutes to produce the conductive adhesive mixture.

An ITO glass was cut according to a predetermined size, and then washed with acetone, alcohol and deionized water, respectively. After the ITO glass was dried, an yttrium europium oxide red phosphor was deposited onto an ITO surface of the ITO glass to form a phosphor layer, and then the ITO glass was heat-treated at 450°C for 2 hours. Finally, a conductive adhesive was coated onto the surface of the phosphor layer by the spincoating process and dried at a low temperature of 50°C, and the conductive adhesive was heat treated at 130°C for 5 hours to obtain the fluorescent screen anode plate. The conductive adhesive layer therein had a thickness of about 1 µm.

### Example 4

Preparation of the conductive adhesive mixture: 14 g of SbCl₃, 6 g of InCl₃ solution, 80 g of poly(silicon dioxide), and 600 ml of deionized water were mixed together, and then the mixture was subjected to ultrasonic waves for 30 minutes to produce the conductive adhesive mixture.

An ITO glass was cut according to a predetermined size, and then washed with acetone, alcohol and deionized water, respectively. After the ITO glass is dried, a yttrium cerium silicate blue phosphor was deposited onto an ITO surface by the deposition method to form a phosphor layer, and then the ITO glass was heat-treated at 450°C for 30 minutes. Finally, a conductive adhesive was coated onto the surface of the phosphor layer by the infiltration process and dried at a low temperature of 50°C, and the conductive adhesive was heat treated at 130°C for 10 hours to obtain the fluorescent screen anode plate. The conductive adhesive layer therein had a thickness of about 1.5 µm.

### Example 5

Preparation of the conductive adhesive mixture: 1.5 g of InCl₃ solution, 0.1 g of SnCl₄, 98 g of sodium silicate, 600 ml of ionized water, and 0.4 g of Sn nanoparticles were mixed together, and then the mixture was subjected to ultrasonic waves for 30 minutes to produce the conductive adhesive mixture.

An ITO glass was cut according to a predetermined size, and then washed with acetone, alcohol and deionized water, respectively. After the ITO glass was blown dry with an inert gas, a yttrium europium oxide red phosphor was deposited onto an ITO surface by the screen printing method to form the phosphor layer, and then the ITO glass was heat-treated at 450°C for 2 hours. Finally, a conductive adhesive was coated onto the surface of the phosphor layer by the spincoating process and dried at a low temperature of 50°C, and the conductive adhesive was at 150°C for 3 hours to obtain the fluorescent screen anode plate. The conductive adhesive layer therein had a thickness of about 1.5 µm.

### Example 6

Preparation of the conductive adhesive mixture: 27 g of SnCl₄, 71 g of aluminum oxide, 650 ml of ionized water, and 2 g of Sn nanoparticles were mixed together, and the mixture was subjected to ultrasonic waves for 30 minutes to produce the conductive adhesive mixture.

An ITO glass was cut according to a predetermined size, and then washed with acetone, alcohol and deionized water, respectively. After the ITO glass was blown dry with an inert gas, an yttrium europium oxide red phosphor was deposited onto an ITO surface by the screen printing method to form the phosphor layer, and then the ITO glass was heat-treated at 450°C for 2 hours. Finally, a conductive adhesive was coated onto the surface of the phosphor layer by the infiltration process and dried at a low temperature of 55°C, and the conductive adhesive was heat treated at 150°C for 5 hours to obtain the fluorescent screen anode plate. The conductive adhesive layer therein had a thickness of about 0.8 µm.

## Claims

1. A conductive adhesive mixture, comprising a component A and a component B, wherein
the amount of the component A is 0.1% to 28% of the dry weight of the conductive adhesive mixture; the component A is selected from one or more of the group consisting of SnCl₄, InCl₃ and SbCl₃; and
the amount of the component B is 72% to 99.9% of the dry weight of the conductive adhesive mixture, the component B is selected from one or more of the group consisting of K₂O·nSiO₂, Na₂O·nSiO₂, (SiO₂)ₙ and Al₂O₃.

2. The conductive adhesive mixture according to claim 1, further comprising a component C, the amount of the component C is 0.05% to 2% of the dry weight of the conductive adhesive mixture, and the component C is selected from one or two of the group consisting of Sn nanoparticles and In nanoparticles.

3. A method of preparing the conductive adhesive mixture, comprising the following steps:
providing the component A of 0.1% to 28% by weight and the component B of 72% to 99.9% by weight; wherein the component A is selected from one or more of the group consisting of SnCl₄, InCl₃ and SbCl₃, and the component B is selected from one or more of the group consisting of K₂O·nSiO₂, Na₂O·nSiO₂, (SiO₂)ₙ and Al₂O₃; and
mixing the component A and the component B together, adding deionized water, and subjecting the mixture to ultrasonic waves for 25 to 35 minutes to produce the conductive adhesive mixture.

4. A fluorescent screen anode plate manufactured with the conductive adhesive mixture according to claim 1, comprising:
a substrate having a conductive layer; and
a phosphor layer located on the conductive layer, wherein the fluorescent screen anode plate further comprises a conductive adhesive layer coated on a surface of the phosphor layer and formed by the conductive adhesive mixture.

5. The fluorescent screen anode plate according to claim 4, wherein the thickness of the conductive adhesive layer is in a range of 0.1 to 2 µm.

6. A method of manufacturing the fluorescent screen anode plate according to claim 4, comprising the following steps:
S 1: coating a phosphor onto a conductive layer of a substrate to form a phosphor layer;
S2: coating the conductive adhesive mixture onto the phosphor layer to form a conductive adhesive layer; and
S3: drying and heat-treating the conductive adhesive layer to obtain the fluorescent screen anode plate.

7. The method of manufacturing the fluorescent screen anode plate according to claim 6, wherein in Step S1, the substrate is an indium-tin oxide glass; and the phosphor is yttrium terbium silicate green phosphor, yttrium europium oxide red phosphor or yttrium cerium silicate blue phosphor.

8. The method of manufacturing the fluorescent screen anode plate according to claim 6, wherein Step S1 further comprises: the phosphor layer is heat treated at 450°C for 30 minutes to 2 hours after the formation thereof on the conductive layer of the substrate; and the phosphor is coated onto the conductive layer by a deposition or screen printing method.

9. The method of manufacturing the fluorescent screen anode plate according to claim 6, wherein in Step S2, the conductive adhesive mixture is coated onto the surface of the phosphor layer by an infiltration or spincoating method.

10. The method of manufacturing the fluorescent screen anode plate according to claim 6, wherein in Step S3, the drying temperature is from 45°C to 55°C, the heat treatment temperature is from 120°C to 200°C, and the heat treatment duration is from 30 minutes to 10 hours.

## Patentansprüche

1. Leitfähiges Klebstoffgemisch, umfassend eine Komponente A und eine Komponente B,
wobei
die Menge der Komponente A 0,1 % bis 28 % des Trockengewichts des leitfähigen Klebstoffgemischs beträgt, wobei die Komponente A ausgewählt ist aus einem oder mehreren aus der Gruppe bestehend aus SnCl₄, InCl₃ und SbCl₃; und
die Menge der Komponente B 72 % bis 99,9 % des Trockengewichts des leitfähigen Klebstoffgemischs beträgt, wobei die Komponente B ausgewählt ist aus einem oder mehreren aus der Gruppe bestehend aus K₂O.nSiO₂, Na₂O.nSiO₂, (SiO₂)ₙ und Al₂O₃.

2. Leitfähiges Klebstoffgemisch gemäß Anspruch 1, ferner umfassend eine Komponente C, wobei die Menge der Komponente C 0,05 % bis 2 % des Trockengewichts des leitfähigen Klebstoffgemischs beträgt und die Komponente C ausgewählt ist aus einem oder zwei aus der Gruppe bestehend aus Sn-Nanopartikeln und In-Nanopartikeln.

3. Verfahren zum Herstellen des leitfähigen Klebstoffgemischs, umfassend die folgenden Schritte:
Bereitstellen der Komponente A mit 0,1 Gew.-% bis 28 Gew.-% und der Komponente B mit 72 Gew.-% bis 99,9 Gew.-%; wobei die Komponente A ausgewählt ist aus einem oder mehreren aus der Gruppe bestehend aus SnCl₄, InCl₃ und SbCl₃ und die Komponente B ausgewählt ist aus einem oder mehreren aus der Gruppe bestehend aus K₂O.nSi₂, Na₂O.nSiO₂, (SiO₂)ₙ und Al₂O₃; und
Zusammenmischen der Komponente A und der Komponente B, Zugeben von entionisiertem Wasser und 25 bis 35 Minuten Unterwerfen des Gemischs an Ultraschallwellen, um das leitfähige Klebstoffgemisch herzustellen.

4. Fluoreszenzschirm-Anodenplatte, hergestellt mit dem leitfähigen Klebstoffgemisch gemäß Anspruch 1, umfassend:
ein Substrat mit einer leitfähigen Schicht; und
eine Leuchtstoffschicht, die auf der leitfähigen Schicht angeordnet ist, wobei die Fluoreszenzschirm-Anodenplatte ferner eine leitfähige Klebstoffschicht umfasst, die auf eine Oberfläche der Leuchtstoffschicht geschichtet ist und aus dem leitfähigen Klebstoffgemisch besteht.

5. Fluoreszenzschirm-Anodenplatte gemäß Anspruch 4, wobei die Dicke der leitfähigen Klebstoffschicht in dem Bereich von 0,1 bis 2 µm liegt.

6. Verfahren zum Herstellen der Fluoreszenzschirm-Anodenplatte gemäß Anspruch 4, umfassend folgende Schritte:
S1: Aufschichten eines Leuchtstoffs auf eine leitfähige Schicht eines Substrats, um eine Leuchtstoffschicht zu bilden;
S2: Aufschichten des leitfähigen Klebstoffgemischs auf die Leuchtstoffschicht, um eine leitfähige Klebstoffschicht zu bilden; und
S3: Trocknen und Wärmebehandeln der leitfähigen Klebstoffschicht, um die Fluoreszenzschirm-Anodenplatte zu erhalten.

7. Verfahren zum Herstellen der Fluoreszenzschirm-Anodenplatte gemäß Anspruch 6, wobei bei Schritt S1 das Substrat ein Indiumzinnoxid-Glas ist; und der Leuchtstoff grüner Yttriumterbiumsilicat-Leuchtstoff, roter Yttriumeuropiumoxid-Leuchtstoff oder blauer Yttriumcersilicat-Leuchtstoff ist.

8. Verfahren zum Herstellen der Fluoreszenzschirm-Anodenplatte gemäß Anspruch 6, wobei Schritt S1 ferner umfasst: die Leuchtstoffschicht wird nach ihrer Herstellung auf der leitfähigen Schicht des Substrats 30 Minuten bis 2 Stunden bei 450 °C wärmebehandelt; und der Leuchtstoff wird durch ein Abscheidungs- oder Siebdruckverfahren auf die leitfähige Schicht geschichtet.

9. Verfahren zum Herstellen der Fluoreszenzschirm-Anodenplatte gemäß Anspruch 6, wobei bei Schritt S2 das leitfähige Klebstoffgemisch durch ein Infiltrations- oder Aufschleuderverfahren auf die Oberfläche der Leuchtstoffschicht geschichtet wird.

10. Verfahren zum Herstellen der Fluoreszenzschirm-Anodenplatte gemäß Anspruch 6, wobei bei Schritt S3 die Trocknungstemperatur von 45 °C bis 55 °C beträgt, die Wärmebehandlungstemperatur von 120 °C bis 200 °C beträgt und die Wärmebehandlungsdauer von 30 Minuten bis 10 Stunden beträgt.

## Revendications

1. Mélange adhésif conducteur, comprenant un constituant A et un constituant B, dans lequel
la quantité du constituant A représente 0,1 % à 28 % du poids sec du mélange adhésif conducteur ; le constituant A est choisi parmi un ou plusieurs éléments du groupe constitué par SnCl₄, InCl₃ et SbCl₃ ; et
la quantité du constituant B représente 72 % à 99,9 % du poids sec du mélange adhésif conducteur, le constituant B est choisi parmi un ou plusieurs éléments du groupe constitué par K₂O·nSiO₂, Na₂O-nSiO₂, (SiO₂)ₙ et Al₂O₃.

2. Mélange adhésif conducteur selon la revendication 1, comprenant en outre un constituant C, la quantité du constituant C représentant 0,05 % à 2 % du poids sec du mélange adhésif conducteur, et le constituant C étant choisi parmi un élément ou les deux du groupe constitué par des nanoparticules de Sn et des nanoparticules d'In.

3. Procédé de préparation du mélange adhésif conducteur, comprenant les étapes suivantes :
se procurer le constituant A à 0,1 % à 28 % en poids et le constituant B à 72 % à 99,9 % en poids ; le constituant A étant choisi parmi un ou plusieurs éléments du groupe constitué par SnCl₄, InCl₃ et SbCl₃, et le constituant B étant choisi parmi un ou plusieurs éléments du groupe constitué par K₂O·nSiO₂, Na₂O·nSiO₂, (SiO₂)ₙ et Al₂O₃ ; et
mélanger le constituant A et le constituant B, ajouter de l'eau déminéralisée, et soumettre le mélange à des ondes ultrasonores pendant 25 à 35 minutes pour produire le mélange adhésif conducteur.

4. Plaque anodique d'écran fluorescent fabriquée avec le mélange adhésif conducteur selon la revendication 1, comprenant :
un substrat ayant une couche conductrice ; et
une couche de luminophore située sur la couche conductrice, la plaque anodique d'écran fluorescent comprenant en outre une couche adhésive conductrice appliquée sur une surface de la couche de luminophore et formée par le mélange adhésif conducteur.

5. Plaque anodique d'écran fluorescent selon la revendication 4, dans laquelle l'épaisseur de la couche adhésive conductrice se situe dans une gamme de 0,1 à 2 µm.

6. Procédé de fabrication de la plaque anodique d'écran fluorescent selon la revendication 4, comprenant les étapes suivantes :
S1: appliquer un luminophore sur une couche conductrice d'un substrat pour former une couche de luminophore ;
S2 : appliquer le mélange adhésif conducteur sur la couche de luminophore pour former une couche adhésive conductrice ; et
S3 : sécher et traiter thermiquement la couche adhésive conductrice pour obtenir la plaque anodique d'écran fluorescent.

7. Procédé de fabrication de la plaque anodique d'écran fluorescent selon la revendication 6, dans lequel, à l'étape S1, le substrat est un verre à l'oxyde d'indium et d'étain ; et le luminophore est un luminophore vert au silicate d'yttrium et de terbium, un luminophore rouge à l'oxyde d'yttrium et d'europium ou un luminophore bleu au silicate d'yttrium et de cérium.

8. Procédé de fabrication de la plaque anodique d'écran fluorescent selon la revendication 6, dans lequel l'étape S1 comprend en outre les opérations suivantes : la couche de luminophore est traitée thermiquement à 450 °C pendant 30 minutes à 2 heures après la formation de celle-ci sur la couche conductrice du substrat ; et le luminophore est appliqué sur la couche conductrice par un procédé de dépôt ou de sérigraphie.

9. Procédé de fabrication de la plaque anodique d'écran fluorescent selon la revendication 6, dans lequel, à l'étape S2, le mélange adhésif conducteur est appliqué sur la surface de la couche de luminophore par un procédé d'infiltration ou de dépôt à la tournette.

10. Procédé de fabrication de la plaque anodique d'écran fluorescent selon la revendication 6, dans lequel, à l'étape S3, la température de séchage est de 45 °C à 55 °C, la température de traitement thermique est de 120 °C à 200 °C, et la durée du traitement thermique est de 30 minutes à 10 heures.
